(19) 

**Europäisches Patentamt**
**European Patent Office**
**Office européen des brevets**

(11) **EP 4 738 444 A1**

(12) **EUROPEAN PATENT APPLICATION**

(43) Date of publication:
**06.05.2026 Bulletin 2026/19**

(21) Application number: **25211845.0**

(22) Date of filing: **28.10.2025**

(51) International Patent Classification (IPC):
*H01M 4/04* (2006.01)     *H01M 10/0525* (2010.01)

(52) Cooperative Patent Classification (CPC):
**H01M 4/0435; H01M 4/0404; H01M 10/0525;**
H01M 2004/021; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **30.10.2024 KR 20240151070**

(71) Applicant: **SK On Co., Ltd.**
**Seoul 03161 (KR)**

(72) Inventors:
• **YU, Gyeong Hwa**
**34124 Daejeon (KR)**

• **KANG, Byung Chan**
**34124 Daejeon (KR)**
• **YIM, Hyung Joo**
**34124 Daejeon (KR)**
• **JIN, Bo Gyeong**
**34124 Daejeon (KR)**
• **HEO, Kyun**
**34124 Daejeon (KR)**

(74) Representative: **Prüfer & Partner mbB**
**Patentanwälte · Rechtsanwälte**
**Sohnckestraße 12**
**81479 München (DE)**

(54) **METHOD FOR MANUFACTURING ELECTRODE FOR LITHIUM SECONDARY BATTERY, ELECTRODE, LITHIUM SECONDARY BATTERY INCLUDING THE SAME**

(57)     Methods for manufacturing an electrode for a lithium secondary battery, electrodes for a lithium secondary battery, and lithium secondary batteries including the electrodes are disclosed. In one embodiment, the method for manufacturing an electrode for a lithium secondary batteries may include: forming an electrode active material layer on at least one side of the electrode current collector, forming a plurality of grooves in the electrode active material layer, and rolling the electrode active material layer that includes the plurality of grooves.

# FIG. 1

```
        ┌─────────┐
        │  Start  │
        └────┬────┘
             │
   ┌──────────────────┐
   │ Preparation step │ ─── S100
   └────────┬─────────┘
            │
   ┌──────────────────┐
   │  Formation step  │ ─── S200
   └────────┬─────────┘
            │
   ┌──────────────────┐
   │   Rolling step   │ ─── S300
   └────────┬─────────┘
            │
        ┌─────────┐
        │   End   │
        └─────────┘
```

EP 4 738 444 A1

**Description**

TECHNICAL FIELD

The technology and implementations disclosed in this patent document generally relate to electrodes for a lithium secondary battery and lithium secondary batteries including the electrodes.

BACKGROUND

As the charging speed of lithium secondary batteries increases, the time required to prepare them for use after discharge can be shortened. Therefore, research on lithium secondary batteries capable of rapid charging has recently attracted significant attention.

SUMMARY

In an aspect of the disclosed technology, an electrode for a lithium secondary battery and a method for manufacturing the same are desired to minimize electrode resistance without reducing electrode density.
In another aspect of the disclosed technology, a lithium secondary battery is designed to maintain its lifespan characteristics even during rapid charging.
In addition, some embodiments of the disclosed technology can be widely applied to electric vehicles, battery charging stations, energy storage systems (ESS), and other green technology fields such as photovoltaics and wind power using batteries. The disclosed technology may also be used in eco-friendly mobility solutions, including electric vehicles and hybrid vehicles, to help mitigate climate change by suppressing air pollution and greenhouse gas emissions.
The disclosed technology can be implemented in some embodiments to address the issued discussed above by providing a method of manufacturing an electrode for a lithium secondary battery, including: forming an electrode active material layer on at least one surface of an electrode current collector; forming a plurality of grooves in the electrode active material layer; and rolling the electrode active material layers that include the plurality of grooves.
In some implementations, the electrode may be a negative electrode.
In some implementations, the plurality of grooves may be arranged such that each pitch between two adjacent grooves of the plurality of grooves is in a range of 50 $\mu$m to 200 $\mu$m. In some implementations, the term "pitch" can be used to indicate the center-to-center distance between two adjacent grooves.
In some implementations, each of the plurality of grooves has a depth of 10 $\mu$m to 250 $\mu$m.
In some implementations, each of the plurality of grooves has a width of 10 $\mu$m to 200 $\mu$m.
In some implementations, the plurality of grooves is formed such that, in the cross-section view taken in a thickness direction of the electrode active material layer, each groove includes a shape that includes at least a part of a circle, at least a part of a square, at least a part of a triangle, or at least part of a trapezoid.
In some implementations, the plurality of grooves has a common shape.
In some implementations, the electrode active material layer may be processed by rolling to have a first thickness deviation of 4.5% or less, as defined by the following equation 1.

[Equation 1]

$$\text{First thickness deviation (\%)} = \left( \frac{T_h - T_a}{T_a} \right) \times 100$$

wherein $T_h$ is a maximum thickness of the electrode after the rolling is performed, and $T_a$ is an average thickness of the electrode before the forming of the plurality of grooves.
In some implementations, an electrode for a lithium secondary battery based on the disclosed technology may include: an electrode current collector, and an electrode active material layer formed on at least one surface of the electrode current collector, wherein the electrode active material layer may include a plurality of grooves and corresponding closed portions adjacent to each of the plurality of grooves.
In some implementations, the electrode may be a negative electrode for lithium secondary batteries.
In some implementations, the plurality of grooves may be arranged such that each pitch between two adjacent grooves of the plurality of grooves is in a range of 50 $\mu$m to 200 $\mu$m.
In some implementations, each of the plurality of grooves may have a depth of 10 $\mu$m to 250 $\mu$m.
In some implementations, each of the plurality of grooves may have a width of 10 $\mu$m to 200 $\mu$m.
In some implementations, each of the plurality of grooves may include a shape that includes at least a part of a circle, at least a part of a square, at least a part of a triangle, or at least a part of a trapezoid, when observed in a cross section in a thickness direction of the electrode active material layer.

In some implementations, the plurality of grooves in the electrode may have a common shape.

In some implementations, the electrode may have a second thickness deviation of 4.5% or less, as defined by the following equation 2.

[Equation 2]

$$\text{Second thickness deviation (\%)} = \left(\frac{L5-L4}{L4}\right) \times 100$$

wherein L4 is an average thickness of the electrode and L5 is a maximum thickness of the electrode.

In some implementations, each of the closed portions in the electrode may seal a corresponding groove.

The disclosed technology can also be implemented in some embodiments to provide an electrode manufactured by the method discussed above such as an electrode for a lithium secondary battery.

BRIEF DESCRIPTION OF THE DRAWINGS

FIG. 1 is a flowchart illustrating a method of manufacturing an electrode for a lithium secondary battery based on one embodiment of the disclosed technology.

FIG. 2 is a diagram illustrating a method of forming a plurality of grooves in an electrode active material layer using a pattern roller in the formation step in the manufacturing of an electrode for a lithium secondary battery based on one embodiment of the disclosed technology.

FIG. 3 is a view showing a cross-section in a machine direction (MD direction) among cross-sections in the thickness direction of an electrode in which a plurality of grooves are formed in the electrode active material layer during the formation step based on one embodiment of the disclosed technology.

FIG. 4 is a view showing a cross-section in the MD direction among cross-sections in the thickness direction of an electrode in which a plurality of grooves are formed in the electrode active material layer during the formation step based on another embodiment of the disclosed technology.

FIG. 5 is a view showing a cross-section in the MD direction among cross-sections in the thickness direction of an electrode in which a plurality of grooves are formed in the electrode active material layer during the formation step based on another embodiment of the disclosed technology.

FIG. 6 is a view showing a cross section in the MD direction among cross sections in the thickness direction of an electrode in which a plurality of grooves are formed in the electrode active material layer during the formation step based on another embodiment of the disclosed technology.

FIG. 7 is a view showing a cross section in the MD direction among cross sections in the thickness direction of an electrode for a lithium secondary battery during the formation step based on one embodiment of the disclosed technology.

FIG. 8 is a view showing a cross section in the MD direction among cross sections in the thickness direction of an electrode for a lithium secondary battery based on another embodiment of the disclosed technology.

FIG. 9 is a view showing a cross section in the MD direction among cross sections in the thickness direction of an electrode for a lithium secondary battery based on another embodiment of the disclosed technology.

FIG. 10 is a view showing a cross section in the MD direction of a cross section in a thickness direction of an electrode for a lithium secondary battery based on another embodiment of the disclosed technology.

FIG. 11 is a scanning electron microscope (SEM) image of a surface of an electrode in which a plurality of grooves are formed in an active material layer based on one embodiment of the disclosed technology.

FIG. 12 is an SEM image of a surface of an electrode after rolling an electrode in which a plurality of grooves are formed in an active material layer based on one embodiment of the disclosed technology.

FIG. 13 is an X-ray microscopy (XRM) image of a cross-section in the thickness direction of an electrode in which a plurality of grooves are formed in an active material layer based on one embodiment of the disclosed technology.

FIG. 14 is an XRM image of a cross-section in the thickness direction of an electrode after rolling an electrode in which a plurality of grooves are formed in an active material layer based on one embodiment of the disclosed technology.

FIG. 15 is a graph showing the capacity retention rates of the batteries including the negative electrodes of Example 2, Comparative Example 2, and Comparative Example 8.

FIG. 16 is a graph showing direct current internal resistance (DC-IR) values of batteries including negative electrodes of Example 2, Comparative Example 2, and Comparative Example 8.

DETAILED DESCRIPTION

The embodiments described herein may be modified in many different forms, so that the technology based on one embodiment is not limited to the embodiments described below.

In some embodiments, when a part is described as "includes" or "comprises" a component, it is not interpreted as excluding the presence of other components, unless explicitly stated otherwise. In some embodiments terms such as "about" and "substantially," which indicate degrees or approximations, are used to indicate a value that is close to a stated numerical value, taking into account typical manufacturing and material tolerances.

In some embodiments, numerical ranges include all possible combinations of stated lower and upper limits and all values within those ranges, logically derived increments in the form and width of the ranges defined, all values that are dually defined, and the upper and lower limits of numerical ranges that are defined in different forms.

In some embodiments, the term "about" may refer to a value within 30%, 25%, 20%, 15%, 10%, or 5% of the stated value.

In some embodiments, the term "lithium secondary battery" may refer to a battery that generates electrical energy by oxidation and reduction reactions when lithium ions are inserted and removed from the positive and negative electrodes respectively.

Hereinafter, embodiments of the disclosed technology are described in detail with reference to the accompanying drawings. However, the disclosed technology is not limited to the embodiments described herein, and may be implemented in other forms. Throughout the specification, the same reference numerals represent the same components.

In conventional lithium secondary batteries, lithium dendrites can be formed on the surface of the negative electrode during rapid charging at a high C-rate due to resistance at the negative electrode, This can lead to issues such as a decrease in the battery capacity over repeated charge/discharge cycles.

The disclosed technology can be implemented in some embodiments to address these issues by providing lithium secondary batteries that can maintain their lifespan characteristic even during rapid charging.

The disclosed technology can be implemented in some embodiments to provide a method for manufacturing an electrode for a lithium secondary battery, an electrode for a lithium secondary battery, and a lithium secondary battery that can maintain their lifespan characteristic even during rapid charging.

The disclosed technology can be implemented in some embodiments to provide a battery cell and a method of manufacturing the battery cell that can improve the electrical connection stability between an electrode tab and an electrode plate, while simplifying the manufacturing process.

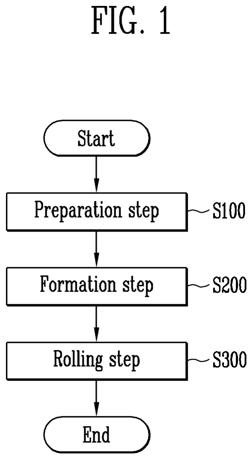

FIG. 1 is a flowchart illustrating a method of manufacturing an electrode for a lithium secondary battery based on one embodiment of the disclosed technology.

A method for manufacturing an electrode for a lithium secondary battery based on one embodiment of the disclosed technology may include: a preparation step S100 of forming an electrode active material layer 200 on at least one surface of an electrode current collector 100; a formation step S200 of forming a plurality of grooves 210 in the electrode active material layer 100; and a rolling step S300 for rolling the electrode active material layers 200 in which the plurality of grooves 210 are formed in the formation step.

In one embodiment, the preparation step S100 may include an applying step S110 for applying an electrode active material to at least one surface of the electrode current collector 100.

In an example embodiment, the electrode current collector 100 may refer to a structure having conductivity without causing a chemical change in a secondary battery or a secondary battery cell. The electrode active material may mean a compound capable of reversible intercalation and/or deintercalation of lithium or lithium ions. Details of the electrode current collector 100 and the active material will be described later.

In an example embodiment, the applying step S110 is not particularly limited as long as it corresponds to a method of applying an electrode active material to a current collector in the field of secondary battery technology, and a known method can be used. Exemplarily, the applying step S110 may be performed by a method such as, but not limited to, a screen printing method, a spraying method, an inkjet method, a thermal transfer method, an offset printing method, a gravure printing method, a slot-die printing method, a comma printing method, and a T-die printing method.

In one embodiment, the preparation step S100 may further include a drying step S120 of drying the electrode current collector 100 to which the electrode active material is applied on at least one surface through the applying step S110. The drying step S120 may be performed without any particular limitation in terms of drying temperature, time, and the like as long as it corresponds to a method of drying an electrode current collector to which an electrode active material is applied in the field of secondary battery technology.

In one embodiment, the preparation step S100 may further include a pre-rolling step S130 of rolling the electrode current collector 100 and the active material through the drying step S120. The pre-rolling step S130 is not particularly limited as long as it corresponds to a method of rolling an electrode current collector coated with an electrode active material in the field of secondary battery technology, and a known method can be used. For example, it may be performed by a roll-to-roll rolling method, but is not limited thereto.

In one embodiment, the electrode prepared in the preparation step S100 may be formed to an appropriate thickness as necessary. Exemplarily, when the total area average thickness of the electrode prepared in the preparation step S100 is defined as $T_a$, the $T_a$ may have a value of 50 $\mu$m to 150 $\mu$m, specifically 75 $\mu$m to 130 $\mu$m, more specifically 80 $\mu$m to 120 $\mu$m.

In one embodiment, the electrode may be a negative electrode. When the above electrode refers to a negative electrode, the above electrode current collector 100 may refer to a negative electrode current collector, and the above electrode active material and electrode active material layer 200 may refer to a positive electrode active material and a negative electrode active material layer. However, it is not necessarily limited thereto, and if necessary, the electrode may mean a positive electrode, or both a negative electrode and a positive electrode. When the electrode means a positive electrode, the electrode current collector 100 may mean a positive electrode current collector, and the electrode active material and electrode active material layer 200 may mean a positive active material and a positive active material layer. The details of this will be described later.

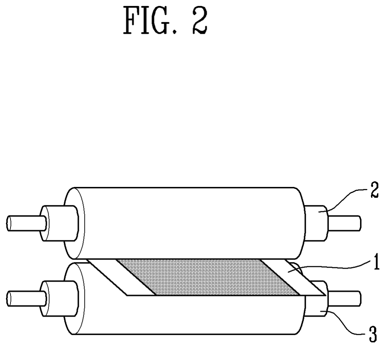

FIG. 2 is a diagram illustrating a method of forming a plurality of grooves in an electrode active material layer using a pattern roller in the formation step in the manufacturing of an electrode for a lithium secondary battery based on one embodiment of the disclosed technology.

In one embodiment, the formation step S200 may refer to a step of forming a plurality of grooves 210 in the electrode active material layer 200. The formation step S200 is not necessarily limited thereto, but as shown in FIG. 2, a plurality of grooves may be formed in the electrode active material layer 200 by pressing the electrode 1 while passing the electrode 1 between the first roller 2 and the second roller 3 in which a plurality of protrusions corresponding to the shape of the groove 210 are formed.

In this case, the plurality of protrusions may be formed on at least one of the first roller 2 and the second roller 3.

As described below, the plurality of grooves 210 may be formed to have specific intervals, depths, and/or widths. To this end, the plurality of protrusions may be formed on at least one of the first roller 2 and the second roller 3 so as to have the interval, depth and/or width.

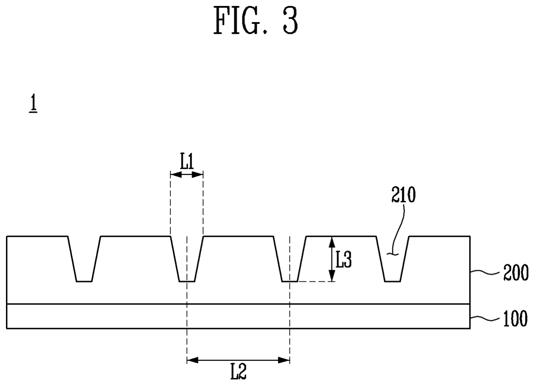

FIG. 3 is a view showing a cross-section in a machine direction (MD direction) among cross-sections in the thickness direction of an electrode in which a plurality of grooves are formed in the electrode active material layer during the formation step based on one embodiment of the disclosed technology.

In one embodiment, the formation step S200 may be configured to form the plurality of grooves 210 such that the pitch L2 between the plurality of the grooves 210 is 50 $\mu$m or more and 200 $\mu$m or less independently. In one embodiment, the formation step S200 may be configured to form the plurality of grooves 210 such that pitch L2 between the plurality of the grooves 210 are each independently 50 $\mu$m or more and 150 $\mu$m or less. In one embodiment, the formation step S200 may be configured to form the plurality of grooves 210 such that pitches L2 between the plurality of the grooves 210 are each independently 50 $\mu$m or more and 100 $\mu$m or less.

Referring to FIG. 3, the pitch L2 may be defined as a distance between the centers of two adjacent grooves 210 among a plurality of grooves 210.

In one embodiment, the formation step S200 may form the plurality of grooves 210 such that the depth L3 of the plurality of the grooves 210 is each independently 10 $\mu$m or more and 250 $\mu$m or less.

Referring to FIG. 3, the depth L3 may be defined as a distance depressed in the thickness direction of the electrode active material layer 200 from the surface of the electrode active materials layer 200 in each groove 210.

In one embodiment, the formation step S200 may form the plurality of grooves 210 such that the width L1 of the plurality of the grooves 210 is each independently 10 $\mu$m or more and 200 $\mu$m or less.

Referring to FIG. 3, the width L1 may be defined as the longest width based on a plane parallel to the surface of the electrode active material layer 200 in the region within each groove 210.

When the electrode for a lithium secondary battery based on one embodiment of the disclosed technology is manufactured to satisfy the above-described numerical ranges, it has a structure advantageous for diffusion of lithium ions into the negative electrode active material, so that the resistance in the electrode is reduced, thereby preventing the formation of lithium dendrite, and the lithium secondary battery including the above-described electrode can significantly improve the capacity retention rate and resistance characteristics during rapid charging.

Each groove 210 shown in FIG. 3 is shown such that the shape observed in the cross-section includes at least a part of a trapezoid, but is not limited thereto and may be formed to include various shapes as described below.

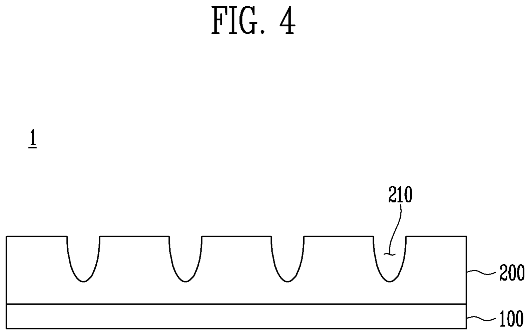

FIG. 4 is a view showing a cross-section in the MD direction among cross-sections in the thickness direction of an electrode in which a plurality of grooves are formed in the electrode active material layer during the formation step based on another embodiment of the disclosed technology.

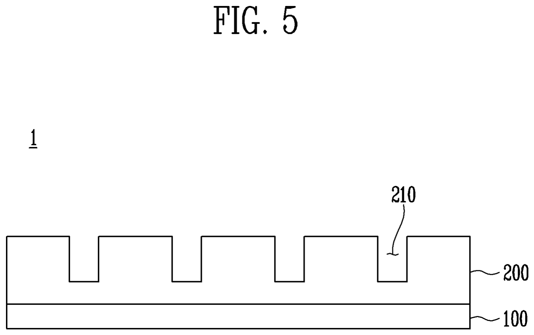

FIG. 5 is a view showing a cross section in the MD direction among cross sections in the thickness direction of an electrode in which a plurality of grooves are formed in the electrode active material layer based on another embodiment of the above formation step.

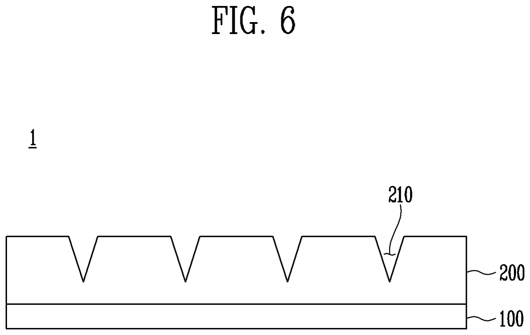

FIG. 6 is a view showing a cross section in the MD direction among cross sections in the thickness direction of an electrode in which a plurality of grooves are formed in the electrode active material layer during the formation step based on another embodiment of the disclosed technology.

In one embodiment, the formation step S200 may form the plurality of grooves 210 such that the shapes observed in the cross section in the thickness direction of the electrode active material layer 200 each independently include any one shape that includes at least a part of a circle, at least a part of a square, at least a part of a triangle, and at least a part of a trapezoid.

In an example one embodiment, the thickness direction may mean a direction perpendicular to the surface or the interface of the electrode active material layer 200 and the electrode current collector 100 from among directions from the surface of the electrode active materials layer 200 toward the interface. The thickness direction cross section may mean a virtual surface including the thickness direction vector. The thickness direction cross section may include a MD direction cross section or a transverse direction (TD direction) cross section of the electrode. The MD direction may mean a direction parallel to the longitudinal direction of the electrode or a direction of transfer of the electrode, and the TD direction may mean a width direction of the electrode, or a direction perpendicular to the MD direction with respect to the surface and/or the interface. The MD direction cross section may mean an imaginary plane including the MD direction vector, and the TD direction cross section may refer to an imaginary plane including the TD direction vector.

Referring to FIG. 3, the formation step S200 may form the plurality of grooves 210 such that the shape observed in the cross section includes at least a part of a trapezoid.

Referring to FIG. 4, the formation step S200 may form the plurality of grooves 210 such that the shape observed in the cross section includes at least a part of a circle.

Referring to FIG. 5, in the formation step S200, the plurality of grooves 210 may be formed such that the shape observed in the cross section includes at least a part of a square.

Referring to FIG. 6, the formation step S200 may form the plurality of grooves 210 such that the shape observed in the cross section includes at least a part of a triangle.

Unlike shown in FIGS. 3 to 6, in the formation step S200, the plurality of grooves 210 may be formed such that at least some of the grooves have different shapes observed in the cross section.

In one embodiment, the plurality of grooves 210 may be formed in the same shape.

In one embodiment, the plurality of grooves 210 may be formed such that the pitches between the grooves 210 are all the same.

In one embodiment, the plurality of grooves 210 may be formed such that the depths of the grooves 210 are all the same.

In one embodiment, the plurality of grooves 210 may be formed such that the widths of the grooves 210 are all the same.

In an example one embodiment, the plurality of grooves 210 may be formed in the manner shown in FIGS. 3 to 6.

In an example embodiment, in the process of forming the plurality of grooves 210 of the formation step S200, protrusions (not shown) may be formed at a boundary between the grooves 210 and the surface of the electrode active material layer 200.

In one embodiment, the rolling step S300 may refer to a step of rolling the electrode active material layer 200 in which the plurality of grooves 210 are formed in the formation step S200.

The rolling step S300 is not particularly limited as long as it corresponds to a method of rolling an electrode current collector applied with an electrode active material in the field of secondary battery technology as described in the pre-rolling step S130, and a known method can be used. For example, it may be performed by a roll-to-roll rolling method, but is not limited thereto.

As described above, in the formation step S200, a protrusion (not shown) may be formed at a boundary between the groove 210 and the surface of the electrode active material layer 200 in the process of forming the plurality of grooves 210. In the rolling step S300, the electrode active material layer 200 that has passed through the formation step S200 is rolled, so that a mechanical external force is applied to the protrusions (not shown) to form a correspondingly formed closed portion 220 adjacent to each of the plurality of grooves 210 as described below. That is, the protrusions (not shown) may be removed by the rolling step S300 to form a flattened electrode surface.

In one embodiment, the rolling step S300 may roll the electrode active material layer 200 so that the first thickness deviation defined by the following equation 1 is 4.5% or less.

[Equation 1]

$$\text{First thickness deviation } (\%) = \left( \frac{T_h - T_a}{T_a} \right) \times 100$$

In the above relational equation 1, $T_h$ is the maximum thickness of the electrode after the rolling step S300 is performed, and $T_a$ is the electrode average thickness in the preparation step S100.

The $T_h$ may refer to a maximum thickness value observed at the electrode after the rolling step S300 is performed.

As described above, $T_a$ may mean an average thickness value of all regions of the electrode prepared in the preparation step S100. The $T_h$ and/or $T_a$ can be measured directly using a micrometer or by measuring the cross-sectional thickness after obtaining an SEM image of the electrode cross-section.

In some implementations, the first thickness deviation may be specifically 4.0% or less, 3.5% or less, or 3.0% or less. More specifically, the first thickness deviation may be 2.0% or less, 1.5% or less, or 1.0% or less.

The first thickness deviation may be adjusted by adjusting the rolling pressure, input/output tension, temperature, and the like in the rolling step S300. The rolling pressure, input/output tension, and temperature may be set as conventional conditions for rolling electrodes in the art.

In the method for manufacturing an electrode for a lithium secondary battery based on one embodiment of the disclosed technology, when the above-described numerical range is satisfied, the thickness deviation of the electrode to be manufactured is minimized, so that the electrode density can be maintained even when a porous electrode is manufactured, and the lithium secondary battery including the electrode can be significantly improved in the capacity retention rate and resistance characteristics during rapid charging.

## Electrodes for Lithium Secondary Battery

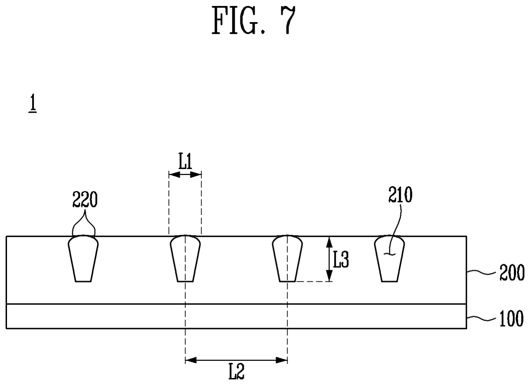

FIG. 7 is a view showing a cross section in the MD direction among cross sections in the thickness direction of an electrode for a lithium secondary battery during the formation step based on one embodiment of the disclosed technology.

An electrode 1 for a lithium secondary battery based on one embodiment of the disclosed technology includes: an electrode current collector 100; and an electrode active material layer 200 formed on at least one surface of the electrode current collector 100, wherein the electrode active material layer 220 may include a plurality of grooves 210 and a corresponding closed portion 220 adjacent to each of the plurality of grooves 310.

In one embodiment, the electrode may be a negative electrode.

In an example embodiment, the electrode current collector 100 may mean a negative electrode current collector. Non-limiting examples of the negative electrode current collector include copper foil, nickel foil, stainless steel foil, titanium foil, nickel foam, copper foam, a polymer substrate coated with a conductive metal, and the like. The thickness of the negative electrode current collector may be, but is not limited to, for example, 10 to 50 $\mu m$.

In an example embodiment, the electrode active material layer 200 may include an electrode active material. The electrode active material layer 200 may refer to a negative electrode active material layer, and the electrode active material may refer to a positive electrode active material. As the negative electrode active material, a material capable of adsorbing and desorbing lithium ions may be used. For example, the negative electrode active material may be a carbon-based material such as crystalline carbon, amorphous carbon, a carbon composite, or carbon fiber; a lithium metal; a lithium alloy; a silicon (Si)-containing material or a tin (Sn)-containing material.

Examples of the amorphous carbon include hard carbon, soft carbon, coke, mesocarbon microbead (MCMB), and mesophase pitch-based carbon fiber (MPCF).

Examples of the crystalline carbon include graphite-based carbons such as natural graphite, artificial graphite, graphitized coke, graphitized MCMB, and graphitized MPCF.

Examples of the lithium metal include pure lithium metal or lithium metal in which a protective layer for suppressing dendrite growth or the like is formed. In one embodiment, a lithium metal-containing layer deposited or coated on the negative electrode current collector may be used as the negative electrode active material layer. In one embodiment, a lithium thin film layer may be used as the negative electrode active material layer.

Examples of the element contained in the lithium alloy include aluminum, zinc, bismuth, cadmium, antimony, silicon, lead, tin, gallium, and indium.

The silicone-containing material may provide increased capacity properties. The silicon-containing material may comprise Si, $SiO_x$ (0<x<2), metal-doped $SiO_x$ (0<x<2), silicon-carbon composites, and the like. The metal may comprise lithium and/or magnesium, and the metal-doped $SiO_x$ (0<x<2) may comprise a metal silicate.

Non-limiting examples of the solvent for the negative electrode active material may include water, pure water, deionized water, distilled water, ethanol, isopropanol, methanol, acetone, n-propanol, and t-butanol.

The negative electrode active material layer may further include a binder, and optionally may further include a conductive material, a thickener, and the like.

In one embodiment, the binder may include a styrene-butadiene rubber (SBR) binder, carboxymethyl cellulose (CMC) binder, polyacrylic acid binder, poly(3,4-ethylenedioxythiophene) (PEDOT) binder, or the like.

The conductive material may be added to enhance the conductivity of the negative electrode active material layer and/or the mobility of lithium ions or electrons. For example, the conductive material may include, but is not limited to, carbon-based conductive materials such as graphite, carbon black, acetylene black, Ketjen black, graphene, carbon nanotubes, vapor-grown carbon fiber (VGCF), carbon fibers, and the like, and/or metal-based conductive materials including tin, tin oxide, titanium oxide, perovskite materials such as $LaSrCoO_3$, $LaSrMnO_3$, and the like.

Examples of the thickener may include thickeners such as carboxymethyl cellulose (CMC).

In an example one embodiment, if necessary, the electrode may mean a positive electrode, or both a negative electrode and a positive electrode.

In an example one embodiment, the electrode current collector 100 may mean a positive electrode current collector. The positive electrode current collector may comprise stainless steel, nickel, aluminum, titanium or alloys thereof. The positive electrode current collector may comprise aluminum or stainless steel surface-treated with carbon, nickel, titanium, silver. The thickness of the positive electrode current collector may be, but is not limited to, for example, 10 to 50 $\mu$m.

In an example embodiment thereof, the electrode active material layer 200 may include an electrode active material. In this case, the electrode active material layer 200 may refer to a positive electrode active material layer, and the electrode active material may refer to a negative electrode active material. The positive electrode active material may include a compound capable of reversibly intercalating and deintercalating lithium ions.

The positive electrode active material may include a lithium-nickel metal oxide. The lithium-nickel metal oxide may further comprise at least one of cobalt (Co), manganese (Mn) and aluminum (Al).

In one embodiment, the positive electrode active material or the lithium-nickel metal oxide may include a layered structure or a crystal structure represented by the following formula (1).

[Formula 1] $\quad Li_xNi_aM_bO_{2+z}$

In formula (1), $0.9 \leq x \leq 1.2$, $0.6 \leq a \leq 0.99$, $0.01 \leq b \leq 0.4$, and $-0.5 \leq z \leq 0.1$ may be satisfied. As described above, M may include Co, Mn and/or Al.

The chemical structure represented by the formula 1 represents the bonding relationship included in the layered structure or crystal structure of the positive electrode active material and does not exclude other additional elements. For example, M may comprise Co and/or Mn, and Co and/or M may be provided together with Ni as the main active element of the positive electrode active material. Formula 1 is provided to express the bonding relationship of the above main active elements and should be understood in a way that encompasses the introduction and substitution of additional elements.

In one embodiment, in addition to the main active element, auxiliary elements for enhancing the chemical stability of the positive electrode active material or the layered structure/crystalline structure may be further included. It should be understood that the above auxiliary elements may be incorporated together in the above layered structure/crystalline structure to form a bond, which is also included within the chemical structure range represented by the formula 1.

Said auxiliary element may for example comprise at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may also act as an auxiliary active element that contributes to the capacity/output activity of the positive electrode active material together with Co or Mn, for example, Al.

For example, the positive electrode active material or the lithium-nickel metal oxide may include a layered structure or a crystal structure represented by the following formula (1-1).

[Formula 1-1] $\quad Li_xNi_aM1_{b1}M2_{b2}O_{2+z}$

In the formula (1-1), M1 may include Co, Mn, and/or Al. M2 may comprise the auxiliary elements described above. In the formula (1-1), $0.9 \leq x \leq 1.2$, $0.6 \leq a \leq 0.99$, $0.01 \leq b1+b2 \leq 0.4$, and $-0.5 \leq z \leq 0.1$ may be satisfied.

The positive electrode active material may further include a coating element or a doping element. For example, elements substantially the same as or similar to the auxiliary elements described above may be used as coating elements or doping elements. For example, one of the above-described elements may be used alone or two or more thereof may be used in combination as a coating element or a doping element.

The coating element or the doping element may be present on the surface of the lithium-nickel metal oxide particle, or may penetrate through the surface of the Lithium-nickel metal composite oxide particle and be contained in the bonding structure represented by the formula (1) or the formula (1-1).

The positive electrode active material may include nickel-cobalt-manganese (NCM) based lithium oxide. In this case, NCM-based lithium oxide with increased nickel content may be used.

Ni may be provided as a transition metal associated with the output and capacity of the lithium secondary battery. Therefore, by employing a high-Ni composition as described above for the positive electrode active material, a high-capacity positive electrode and a high-capacity lithium secondary battery can be provided.

However, as the content of Ni is increased, the long-term storage stability and lifetime stability of the positive electrode or the secondary battery may be relatively decreased, and side reactions with the electrolyte may also be increased. However, in example embodiments, it is possible to improve lifetime stability and capacity retention characteristics through Mn while maintaining electrical conductivity by including Co.

The content of Ni in the NCM-based lithium oxide (e.g., the molar fraction of nickel in the total number of moles of nickel, cobalt, and manganese) may be 0.6 or more, 0.7 or more, or 0.8 or more. In one embodiment, the content of Ni may be from 0.8 to 0.95, from 0.82 to 0.95, from 0.83 to 0.95, from 0.14 to 0.95, from 0.5 to 0.95, or from 0.88 to 0.95.

In one embodiment, the positive electrode active material may include a lithium cobalt oxide active material, a lithium manganese oxide active material, lithium nickel oxide active material, or a lithium iron phosphate (LFP) active material (e.g., $LiFePO_4$).

The positive electrode active material layer may further include a positive electrode binder and a conductive material. If necessary, the positive electrode active material layer may further contain a thickener. In one embodiment, the positive electrode binder may include polyvinylidenefluoride (PVDF), Poly(vinylidene fluoride-co-hexafluoropropylene), polyacrylonitrile, polymethylmethacrylate, butadiene rubber, and the like. In one embodiment, a PVDF-based binder may be used as the positive electrode binder.

The conductive material may be added to enhance the conductivity of the active material layer and/or the mobility of lithium ions or electrons. For example, the conductive material may include, but is not limited to, carbon-based conductive materials such as graphite, carbon black, acetylene black, Ketjen black, graphene, carbon nanotube (CNT), vapor-grown carbon fiber (VGCF), carbon fibers, and the like, and/or metal-based conductive materials including tin, tin oxide, titanium oxide, perovskite materials such as $LaSrCoO_3$, $LaSrMnO_3$, and the like.

If necessary, the active material layer may further contain a thickener and/or a dispersant. As an example, the active material layer may comprise a thickener such as carboxymethyl cellulose (CMC).

In one embodiment, the electrode active material layer 200 may include a plurality of grooves 210.

In one embodiment, the plurality of grooves 210 may each independently have a pitch L2 between the grooves 210 greater than or equal to 50 $\mu$m and less than or equal to 200 $\mu$m. In a specific embodiment, the pitch L2 between the plurality of grooves 210 may be independently 50 $\mu$m or more and 150 $\mu$m or less. In a more specific embodiment, the plurality of grooves 210 may each independently have a pitch L2 between the grooves 210 of 50 $\mu$m or more and 100 $\mu$m or less.

Referring to FIG. 7, the pitch L2 may be defined as a distance between the centers of two adjacent grooves 210 among a plurality of grooves 210.

In one embodiment, the plurality of grooves 210 may each independently have a depth L3 greater than or equal to 10 $\mu$m and less than or equal to 250 $\mu$m.

Referring to FIG. 7, the depth L3 may be defined as a distance depressed in the thickness direction of the electrode active material layer 200 from the surface of the electrode active materials layer 200 in each groove 210.

In one embodiment, the plurality of grooves 210 may each independently have a width L1 greater than or equal to 10 $\mu$m and less than or equal to 200 $\mu$m.

Referring to FIG. 7, the width L1 may be defined as the longest width based on a plane parallel to the surface of the electrode active material layer 200 in the region within each groove 210.

When the electrode for a lithium secondary battery based on one embodiment of the disclosed technology satisfies the above-described numerical ranges, the electrode has a structure advantageous for diffusion of lithium ions into the negative electrode active material, so that the resistance in the electrode is reduced, thereby preventing the formation of lithium dendrites, and the lithium secondary battery manufactured including the same can significantly improve the capacity retention rate and resistance characteristics during rapid charging.

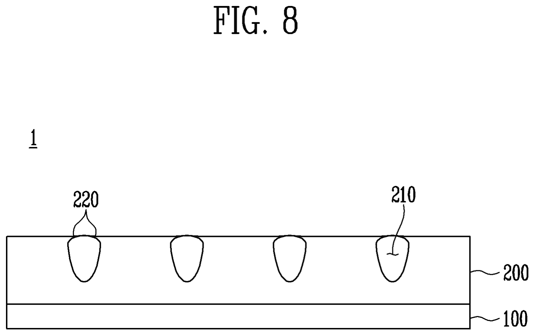

FIG. 8 is a view showing a cross section in the MD direction among cross sections in the thickness direction of an electrode for a lithium secondary battery based on another embodiment of the disclosed technology.

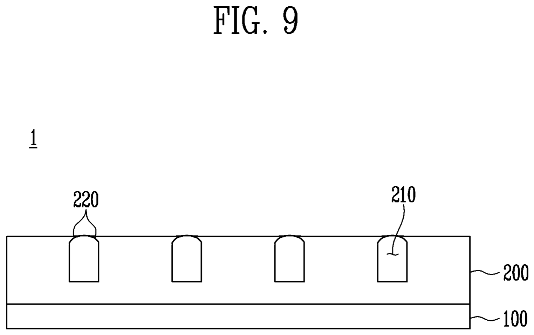

FIG. 9 is a view showing a cross section in the MD direction among cross sections in the thickness direction of an electrode for a lithium secondary battery based on another embodiment of the disclosed technology.

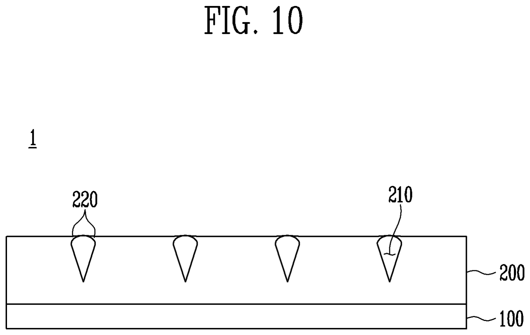

FIG. 10 is a view showing a cross section in the MD direction of a cross section in a thickness direction of an electrode for a lithium secondary battery based on another embodiment of the disclosed technology.

In one embodiment, the plurality of grooves 210 may each independently include any one shape which may include at least a part of a circle, at least a part a rectangle, at least a part a triangle, or at least a part of a trapezoid, when observed in a cross section in the thickness direction of the electrode active material layer 200.

The definitions of the thickness direction and the thickness direction cross section may be the same as those described in the method for manufacturing an electrode for a lithium secondary battery based on one embodiment of the disclosed technology, and thus will be omitted below.

Referring to FIG. 7, the plurality of grooves 210 may include at least a part of a trapezoid in a shape observed in the cross section.

Referring to FIG. 8, the plurality of grooves 210 may include at least a part of a circle in a shape observed in the cross section.

Referring to FIG. 9, the plurality of grooves 210 may include at least a part of a square in a shape observed in the cross section.

Referring to FIG. 10, the plurality of grooves 210 may include at least a part of a triangle in a shape observed in the cross section.

Unlike shown in FIGS. 7 to 10, the plurality of grooves 210 may differ from each other in at least some of the shapes observed in the cross-section.

In one embodiment, the plurality of grooves 210 may have the same shape.

In one embodiment, the plurality of grooves 210 may be formed such that the pitches between the grooves 210 are all the same.

In one embodiment, the plurality of grooves 210 may be formed such that the depths of the grooves 210 are all the same.

In one embodiment, the plurality of grooves 210 may be formed such that the widths of the grooves 210 are all the same.

In an example embodiment, the plurality of grooves 210 may be formed in the manner shown in FIGS. 7 to 10.

In one embodiment, the closed portion 220 may be formed adjacent to each of the plurality of grooves 210.

As described above, in the formation step S200, in the process of forming the plurality of grooves 210, protrusions (not shown) may be formed at the boundary between the grooves 210 and the surface of the electrode active material layer 200. On the other hand, by rolling the electrode active material layer 200 through the formation step S200 through the rolling step S300, a mechanical external force is applied to the protrusions (not shown) formed as described above, so that the closed portions 220 may be formed adjacent to each of the grooves 210.

In one embodiment, each of the closed portions 220 may seal the corresponding groove 210.

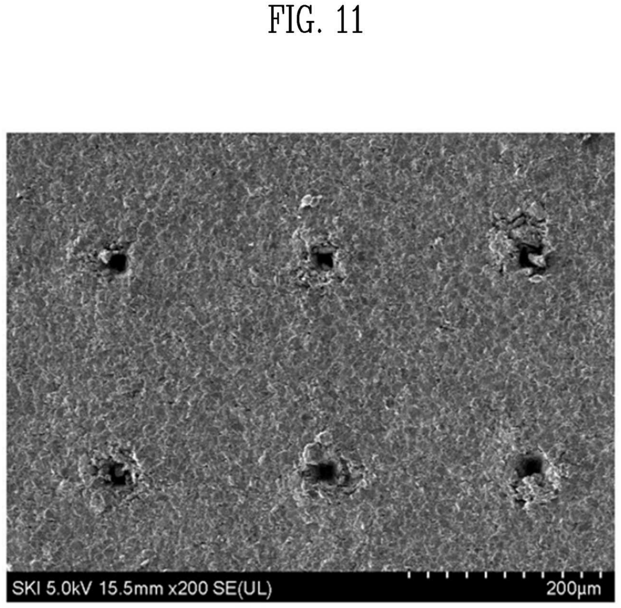

Accordingly, as shown in FIG. 11 to be described below, the plurality of grooves 210 may not be observed on the electrode surface. With such a structure, the electrode for a lithium secondary battery based on one embodiment can have a flattened surface while forming a plurality of grooves therein.

Alternatively, each of the closed portions 220 may include a local opening area such that the interior of the corresponding groove 210 is partially exposed.

In one embodiment, the electrode may have a second thickness deviation of 4.5% or less, as defined by the equation 2.

[Equation 2]

$$\text{Second thickness deviation (\%)} = \left(\frac{L5-L4}{L4}\right) \times 100$$

where L4 is the average thickness of the electrode and L5 is the maximum thickness of the electrode.

The above L4 may mean an average thickness value of the entire region of the electrode. The above L5 may mean the maximum thickness value observed at the electrode. The above L5 may be defined in the same meaning as $T_h$ in the foregoing relational equation 1. The above L4 and/or L5 can be measured directly using a micrometer or by measuring the cross-sectional thickness after obtaining an SEM image of the electrode cross-section.

Meanwhile, the second thickness deviation may specifically be 4.0% or less, 3.5% or less, or 3.0% or less. More specifically, the second thickness deviation may be 2.0% or less, 1.5% or less, or 1.0% or less.

An electrode for a lithium secondary battery based on one embodiment of the disclosed technology may be an electrode manufactured as discussed in this patent document.

An electrode for a lithium secondary battery based on one embodiment of the disclosed technology has a structure advantageous for lithium ion diffusion by including a plurality of grooves 210 therein, but by having a flattened surface, it is possible to implement improved cell performance while maintaining electrode density by minimizing thickness deviation.

## Lithium secondary batteries

A lithium secondary battery may include an electrode manufactured using a manufacturing method based on one embodiment or an electrode implemented based on one embodiment.

A lithium secondary battery based on one embodiment of the disclosed technology may include a negative electrode; a positive electrode; and an electrolyte. The negative electrode and/or the positive electrode may be an electrode for a lithium secondary battery based on one embodiment of the disclosed technology or an electrode produced based on a method for producing an electrode for a Lithium secondary battery based on one embodiment of the disclosed technology.

In one embodiment, the negative electrode may be an electrode for a lithium secondary battery based on one embodiment of the disclosed technology or an electrode manufactured based on a method for manufacturing an electrode for a Lithium secondary battery based on one embodiment of the disclosed technology.

Since the negative electrode or the positive electrode is the same as described above, the following description will be omitted.

The electrolyte may be housed in a case with an electrode assembly including the positive electrode, the negative electrode, and a separator to be described below to define a lithium secondary battery based on one embodiment of the disclosed technology. In example embodiments, a non-aqueous electrolyte may be used as the electrolyte.

The non-aqueous electrolytic solution includes a lithium salt as an electrolyte and an organic solvent, and the lithium salt is represented by $Li^+X^-$, for example, and examples of the anion ($X^-$) of the lithium salt include $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

The organic solvent may include an organic compound having sufficient solubility in the lithium salt and the additive and having no reactivity in the battery. The organic solvent may include, for example, at least one of a carbonate solvent, an ester solvent, an ether solvent, a ketone solvent, an alcohol solvent, and an aprotic solvent. As the organic solvent, for example, propylene carbonate (PC), ethylene carbonate (EC), butylene carbonate, diethyl carbonate (DEC), dimethyl carbonate (DMC), ethylmethyl carbonate (EMC), methylpropyl carbonate, ethylpropyl carbonate and dipropyl carbonate can be used, vinylene carbonate, methyl acetate (MA), ethyl acetate (EA), n-propylacetate (n-PA), 1,1-dimethylethyl acetate (DMEA), methyl propionate (MP), ethylpropionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ester (DEGDME),dimethoxyethane, tetrahydrofuran (THF) and 2-methyltetrahydrofuran, ethyl alcohol, isopropyl alcohol, dimethylsulferoxide, acetonitrile, dimethoxyethane, diethoxyethane, sulfolane, gamma-butyrolactone and propylene sulfite. They may be used alone or in combination of two or more.

The non-aqueous electrolyte solution may further include an additive. Such additives may include, for example, cyclic carbonate-based compounds, fluorine-substituted carbonate-based compounds, sultone-based compounds, cyclic sulfate-based compounds, cyclic sulfite-based compounds, phosphate-based compounds, and borate-based compounds.

A lithium secondary battery based on one embodiment of the disclosed technology may include a separator. The separator may be configured to prevent electrical short-circuiting between the positive electrode and the negative electrode, and to generate a flow of ions. Based on one embodiment, the thickness of the separation membrane may be from 10 μm to 20 μm, but the disclosed technology is not limited thereto.

For example, the separator may comprise a porous polymer film or a porous nonwoven. The porous polymer film may comprise a polyolefin-based polymer, such as an ethylene polymer, a propylene polymer, an ethylene/butene copolymer, an ethylene/hexene copolymer, and an ethylene-methacrylate copolymer. The porous nonwoven fabric may include high melting glass fibers, polyethylene terephthalate fibers, and the like. The separator may also comprise a ceramic-based material. For example, the inorganic particles may be coated on the polymer film or dispersed in the polymer film to improve heat resistance.

The separator may have a single-layer or multi-layer structure comprising the polymer film and/or the nonwoven fabric described above.

In example embodiments, the positive electrode, the negative electrode, and the separator may be repeatedly disposed to form an electrode assembly. In one embodiment, the electrode assembly may be a winding type, a stacking type, a z-folding type, or stack-folding type.

In the lithium secondary battery based on one embodiment of the disclosed technology, the electrode assembly may be embedded in a case and sealed.

For example, a pouch-type case, a square-shaped case, a cylindrical case, a coin-type case, or the like can be used.

It is understood by those skilled in the art that the plurality of exemplary embodiments described above are specific examples of the following aspects:

Aspect 1: A method for manufacturing an electrode for a lithium secondary battery, comprising: forming an electrode active material layer on at least one surface of an electrode current collector; forming a plurality of grooves in the electrode active material layer; and rolling the electrode active material layer that includes the plurality of grooves.

Aspect 2: The method according to Aspect 1, wherein the electrode is a negative electrode.

Aspect 3: The method according to Aspects 1 or 2, wherein (a) the plurality of grooves is arranged such that each pitch between two adjacent grooves of the plurality of grooves is in a range of 50 μm to 200 μm, and/or (b) the plurality of grooves has a depth of 10 μm to 250 μm, and/or (c) the plurality of grooves has a width of 10 μm to 200 μm.

Aspect 4: The method according to any one of Aspects 1 to 3, wherein the plurality of grooves is formed such that, in a cross-section view taken in a thickness direction of the electrode active material layer, each groove includes a shape that includes at least a part of a circle, at least a part of a square, at least a part of a triangle, or at least part of a trapezoid.

Aspect 5: The method according to Aspect 4, wherein the plurality of grooves has a common shape.

Aspect 6: The method according to any one of Aspects 1 to 5, wherein the electrode active material layer is processed by rolling to have a first thickness deviation of 4.5% or less, as defined by Equation 1:

[Equation 1]

$$\text{First thickness deviation (\%)} = \left(\frac{T_h - T_a}{T_a}\right) \times 100$$

wherein $T_h$ is a maximum thickness of the electrode after the rolling is performed, and $T_a$ is an average thickness of the electrode before the forming of the plurality of grooves.

Aspect 7: An electrode for a lithium secondary battery comprising: an electrode current collector and an electrode active material layer formed on at least one surface of the electrode current collector, wherein the electrode active material layer includes a plurality of grooves and corresponding closed portions adjacent to each of the plurality of grooves.

Aspect 8: The electrode for a lithium secondary battery according to Aspect 7, wherein the electrode is a negative electrode.

Aspect 9: The electrode for a lithium secondary battery according to Aspects 7 or 8, wherein (a) the plurality of grooves is arranged such that each pitch between two adjacent grooves of the plurality of grooves is in a range of 50 $\mu$m to 200 $\mu$m, and/or (b) each of the plurality of grooves has a depth of 10 $\mu$m to 250 $\mu$m, and/or (c) each of the plurality of grooves has a width of 10 $\mu$m to 200 $\mu$m.

Aspect 10: The electrode for a lithium secondary battery according to any one of Aspects 7 to 9, wherein the plurality of grooves is formed such that, in a cross-section view taken in a thickness direction of the electrode active material layer, each groove includes a shape which includes at least a part of a circle, at least a part of a square, at least a part of a triangle, or at least part of a trapezoid.

Aspect 11: The electrode for a lithium secondary battery according to Aspect 10, wherein the plurality of grooves have a common shape.

Aspect 12: The electrode for a lithium secondary battery according to any one of Aspects 7 to 11, wherein the electrode has a second thickness deviation of 4.5% or less, as defined by Equation 2:

[Equation 2]

$$\text{Second thickness deviation (\%)} = \left(\frac{L5 - L4}{L4}\right) \times 100$$

wherein L4 is an average thickness of the electrode and L5 is a maximum thickness of the electrode.

Aspect 13: The electrode for a lithium secondary battery according to any one of Aspects 7 to 12, wherein the closed portion seals a corresponding groove.

Aspect 14: A lithium secondary battery comprising the electrode manufactured by the method according to any one of Aspects 1 to 6, or the electrode according to any one of claims 7 to 13.

The lithium secondary battery based on one embodiment of the disclosed technology can be used not only for a battery cell used as a power source of a small device, but also preferably as a unit cell for a battery module of a medium and large device including a plurality of battery cells. Examples of the small device include a mobile phone, a notebook computer, a camera, and the like, and examples of the large and medium-sized device include an electric vehicle, a hybrid electric vehicle, a plug-in hybrid electric vehicle, an electric power storage system, and the like but are not limited thereto.

Hereinafter, embodiments of the disclosed technology will be further described with reference to specific experimental examples. The examples and comparative examples included in the experimental examples are merely illustrative of the disclosed technology and do not limit the scope of the appended claims, and it is obvious to those skilled in the art that various changes and modifications to the examples are possible within the scope and technical idea of the disclosed technology, and it is natural that such changes and modifications fall within the scope of the attached claims.

**Manufacturing Examples**

i.Preparation of negative electrode

Artificial graphite, silicon dioxide ($SiO_2$), single wall carbon nanotube (SWCNT), carboxymethylcellulose (CMC), and styrene-butadiene rubber (SBR) were mixed at 92:4.5:0.5:1.5:1.5 by weight and then dispersed in distilled water to prepare a negative electrode active material slurry.

The slurry prepared as above was applied on both sides at 10 mg/m$^2$ using a slot die on a copper thin film, dried at a predetermined temperature, and then rolled to finally prepare a negative electrode with a thickness of 100 $\mu$m.

(2) Preparation of anode

Li[Ni$_{0.88}$Co$_{0.10}$Mn$_{0.02}$]O$_2$, carbon black, and polyvinylidene fluoride (PVDF) were mixed at 96:3:1 by weight to prepare a positive electrode active material slurry, and the prepared slurry was uniformly applied on both sides on an aluminum thin film, dried at a predetermined temperature, and then rolled to finally prepare a positive electrode having a thickness of 100 μm.

**Embodiments**

(Examples 1 to 7)

A plurality of grooves were formed in the negative electrode active material layer using a pattern roller in the negative electrode prepared in the above preparation example. The negative electrode in which a plurality of grooves were formed as described above was rolled again using a roll press to finally produce a negative electrode.

(Comparative Examples 1 to 7)

The negative electrode prepared in the above preparation example was finally prepared by forming a plurality of grooves in the negative electrode active material layer using a pattern roller.

(Comparative Example 8)

The negative electrode prepared in the above preparation example was prepared without a subsequent process.
The pitches of the grooves formed in the negative electrodes finally produced in Examples 1 to 7 and Comparative Examples 1 to 7 are shown in Table 1 below. On the other hand, the pitch was determined as the pitch of the protrusion formed on the patterned roller.

[Table 1]

| Classification | Pitch (μm) |
|---|---|
| Example 1 | 50 |
| Example 2 | 100 |
| Example 3 | 150 |
| Example 4 | 200 |
| Example 5 | 30 |
| Example 6 | 250 |
| Example 7 | 300 |
| Comparative Example 1 | 50 |
| Comparative Example 2 | 100 |
| Comparative Example 3 | 150 |
| Comparative Example 4 | 200 |
| Comparative Example 5 | 30 |
| Comparative Example 6 | 250 |
| Comparative Example 7 | 300 |

**Evaluation Example 1: Electrode Thickness Deviation Mitigation Evaluation**

FIG. 11 is a scanning electron microscope (SEM) image of a surface of an electrode in which a plurality of grooves are formed in an active material layer based on one embodiment of the disclosed technology.

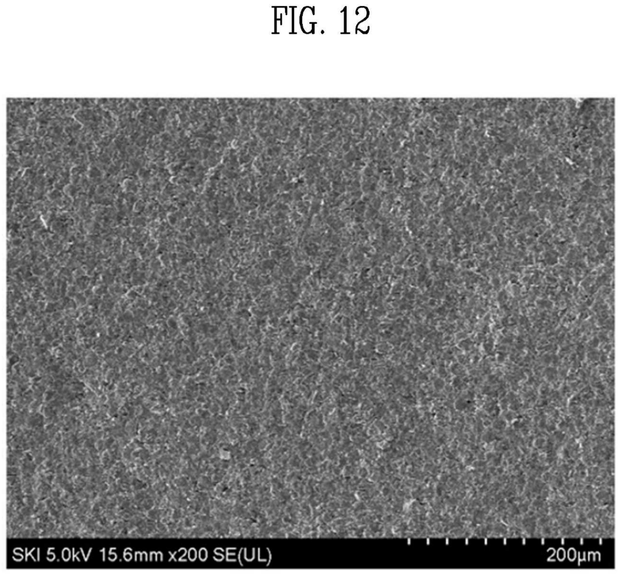

FIG. 12 is an SEM image of a surface of an electrode after rolling an electrode in which a plurality of grooves are formed in an active material layer based on one embodiment of the disclosed technology.

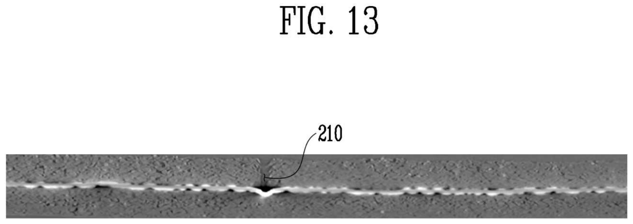

FIG. 13 is an X-ray microscopy (XRM) image of a thickness-direction cross-section of an electrode in which a plurality of grooves are formed in an active material layer based on one embodiment of the disclosed technology.

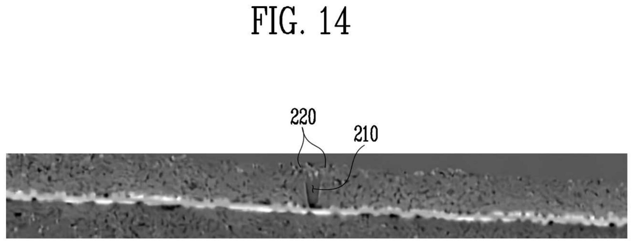

FIG. 14 is an XRM image of a cross-section taken in the thickness direction of an electrode after rolling an electrode in which a plurality of grooves are formed in an active material layer based on one embodiment of the disclosed technology.

Specifically, FIG. 11 is a Scanning Electron Microscope (SEM, e.g., Apreo 2S, Thermo Fisher Scientific) image taken of the negative electrode of Comparative Example 4, and FIG. 12 is the SEM image taken of the anode of Example 4. FIG. 13 is an X-ray microscope (XRM, e.g., Xradia 620, ZEISS) image of the negative electrode of Comparative Example 4, and FIG. 14 is the XRM image of the negative electrode in Example 4.

As shown in FIG. 11 and FIG. 13 above, in the method of manufacturing an electrode for a lithium secondary battery, a plurality of grooves were observed on the surface of the electrode after only the formation step of the disclosed technology, and it was observed that the boundary portion between the grooves and the surface was raised compared to other regions. However, as shown in FIG. 12 and FIG. 14 above, in one embodiment of the disclosed technology, in the electrode that has undergone the additional rolling after the formation step, no groove is observed on the electrode surface, and it can be confirmed that the electrode surface is smooth as a whole.

Meanwhile, the maximum thickness of the negative electrodes of Examples 1 to 7 and Comparative Examples 1 to 7, and the thickness increase rate compared to Comparative Example 8 were measured and calculated, and are shown in Table 2 below. The above thickness was measured based on SEM images of each negative electrode cross section.

[Table 2]

| Classification | Thickness ($\mu$m) | Thickness increase rate (%) | Classification | Thickness ($\mu$m) | Thickness increase rate (%) |
|---|---|---|---|---|---|
| Example 1 | 101 | 1 | Comparative Example 1 | 108 | 8 |
| Example 2 | 101 | 1 | Comparative Example 2 | 108 | 8 |
| Example 3 | 101 | 1 | Comparative Example 3 | 108 | 8 |
| Example 4 | 100 | 0 | Comparative Example 4 | 105 | 5 |
| Example 5 | 102 | 2 | Comparative Example 5 | 110 | 10 |
| Example 6 | 100 | 0 | Comparative Example 6 | 102 | 2 |
| Example 7 | 100 | 0 | Comparative Example 7 | 101 | 1 |

As shown in Table 2 above, in one embodiment of the disclosed technology, it was confirmed that the electrode thickness increase rate of Examples 1 to 7, which are electrodes that have undergone an additional rolling after the formation step, is reduced compared to Comparative Examples 1 to 7 that are electrodes that have not undergone the rolling step. In particular, Example 1 and Comparative Example 1, Example 2 and Comparative Example 2, Example 3 and Comparative Example 3, Example 4 and Comparative Example 4, Example 5 and Comparative Example 5, Example 6 and Comparative Example 6, Example 7 and Comparative Example 7 correspond to example combinations that can be directly compared by forming grooves in the same pattern, and it was confirmed that the thickness increase rate of Examples 1 to 7 in each was significantly reduced compared to the corresponding Comparative Examples 1 to 7.

**Evaluation Example 2: Evaluation of Life Characteristics**

A. **Capacity Retention Assessment**

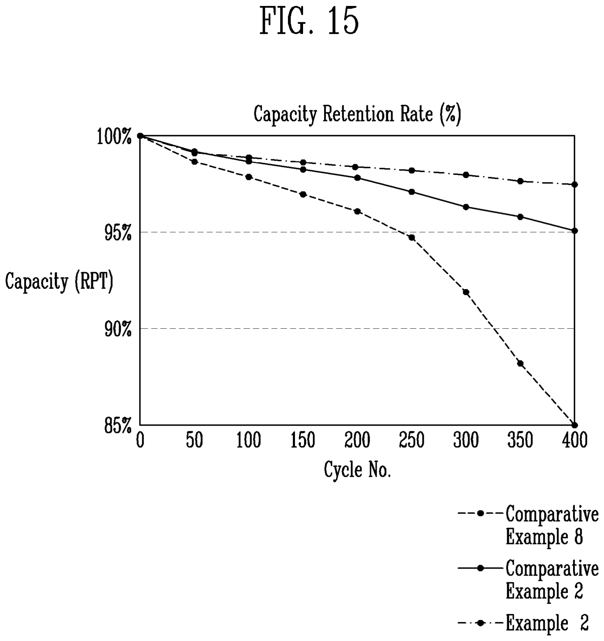

FIG. 15 is a graph showing the capacity retention rates of the batteries including the negative electrodes of Example 2, Comparative Example 2, and Comparative Example 8.

Each of the lithium secondary batteries including the negative electrodes of Example 2, Comparative Example 2, and Comparative Example 8 was configured. Specifically, each negative electrode and the positive electrode prepared in the above preparation examples were stacked by notching to a predetermined size, and a separator (PE, 25 $\mu$m) was interposed between the positive electrode plate and the negative electrode plate to form each battery. The electrolyte solution was prepared by mixing ethylene carbonate (EC), ethyl methyl carbonate (EMC), and diethyl carbonate (DEC) in a volume ratio of 25:45:30 to prepare a 1 M LiPF$_6$ solution, and then adding 1 wt % of vinylene carbonate (VC), 0.5 wt % of 1,3-propene sultone (PRS), and 0.5 wt % of lithium bisoxalatoborate (LiBOB).

The discharge capacity was measured while charging (CC/CV 2.0C 4.2V 0.1C CUT-OFF) and discharging (CC 0.33C 2.5V CUT-OFF) were repeated 400 times for each battery including each negative electrode. The percentage of the discharge capacity divided by the discharge capacity at one time was calculated as the capacity retention rate.

The capacity retention rate of each battery including the negative electrode of Example 2, Comparative Example 2, and Comparative Example 8 is shown in Table 3 below.

[Table 3]

| Classification | Capacity retention rate (%) |
|---|---|
| Example 2 | 97.44 |
| Comparative Example 2 | 95.08 |
| Comparative Example 8 | 85.02 |

As shown in FIG. 15 and Table 3 above, based on one embodiment of the disclosed technology, it was confirmed that the battery including Example 2, which is a negative electrode showing a thickness increase rate of 4.5% or less through an additional rolling step after the step of forming a plurality of grooves, significantly improved the capacity retention rate compared to the battery including Comparative Example 2, which was a negative electrode that did not go through the rolling step, or Comparative Example 8, which did not even go through the groove formation step. This is believed to be due to the fact that an electrode in which a plurality of grooves are formed in the active material layer has a structure advantageous for lithium ion diffusion as compared to the case where the plurality of grooves is not formed, and an electrode having a flattened surface by being additionally rolled after formation step the plurality of the grooves can maintain the electrode density in the case where the grooves are not formed even if the grooves are formed.

## 2. DC-IR Assessment

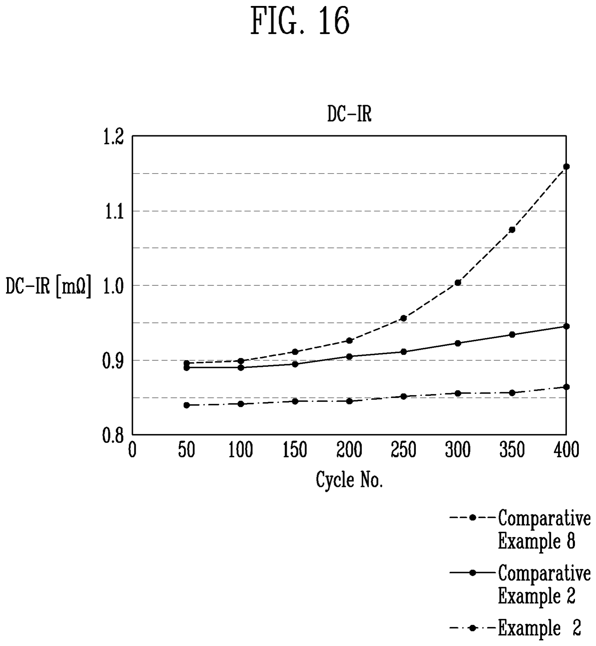

FIG. 16 is a graph showing direct current internal resistance (DC-IR) values of batteries including negative electrodes of Example 2, Comparative Example 2, and Comparative Example 8.

Each of the lithium secondary batteries including the negative electrodes of Example 2, Comparative Example 2, and Comparative Example 8 was configured. Specifically, each negative electrode and the positive electrode prepared in the above preparation examples were stacked by notching to a predetermined size, and a separator (PE, 25 $\mu$m) was interposed between the positive electrode plate and the negative electrode plate to form each battery. The electrolyte solution was prepared by mixing ethylene carbonate (EC), ethyl methyl carbonate (EMC), and diethyl carbonate (DEC) in a volume ratio of 25:45:30 to prepare a 1M $LiPF_6$ solution, and then adding 1 wt % of vinylene carbonate (VC), 0.5 wt % of 1,3-propene sultone (PRS), and 0.5 wt % of lithium bisoxalatoborate (LiBOB).

Charging (CC/CV 2.0C 4.2V 0.1C CUT-OFF) and discharging (CC 0.33C 2.5V CUT-OFF) were repeated 400 times for each battery containing each negative electrode, and then DC-IR values were measured at 25°C.

The DC-IR values of each battery including the negative electrodes of Example 2, Comparative Example 2, and Comparative Example 8 are shown in Table 4 below.

[Table 4]

| Classification | DC-IR(m$\Omega$) |
|---|---|
| Example 2 | 0.865 |
| Comparative Example 2 | 0.945 |
| Comparative Example 8 | 1.16 |

On the other hand, DC-IR of the batteries including the negative electrodes of Examples 1 to 7 and Comparative Example 8 were measured and comparatively evaluated. The configuration of the battery including each negative electrode was the same as in the above evaluation example. Each battery including each negative electrode was charged with 0.33C CC/CV (4.2V) at 25°C up to SOC 50%, and then 0.33C CC was discharged at a C-rate of 1C for 10 seconds to measure the DC-IR value of each battery. The relative values of the DC-IR values of each of the batteries including the negative electrodes of Examples 1 to 7 to the DC-IR value of the battery including the negative electrode of Comparative Example 8 are shown in Table 5 below.

[Table 5]

| Classification | DC-IR relative value (%) compared to Comparative Example 8 |
|---|---|
| Example 1 | 94.20 |
| Example 2 | 94.70 |
| Example 3 | 96.50 |
| Example 4 | 97.40 |
| Example 5 | 97.70 |
| Example 6 | 99.40 |
| Example 7 | 99.50 |
| Comparative Example 8 | 100.00 |

As shown in FIG. 16 and Table 4 above, based on one embodiment of the disclosed technology, it was confirmed that the battery including Example 2, which is a negative electrode showing a thickness increase rate of 4.5% or less through an additional rolling step after the step of forming a plurality of grooves, had significantly improved resistance characteristics compared to the battery including Comparative Example 2, which was a negative electrode that did not go through the rolling step, or Comparative Example 8, which did not even go through the groove formation step. This is believed to be due to the fact that an electrode in which a plurality of grooves are formed in the active material layer has a structure advantageous for lithium ion diffusion as compared to the case where the plurality of grooves is not formed, and an electrode having a smooth surface by being additionally rolled after formation step the plurality of the grooves can maintain the electrode density in the case where the grooves are not formed even if the grooves are formed.

On the other hand, as shown in Table 5 above, it was confirmed that the resistance characteristics of a battery including a negative electrode in which a plurality of grooves are formed so that the pitch between the grooves is 50 μm or more and 200 μm or less were further improved compared to the case where the pitch was not 50 μm. This is considered to be due to the fact that a negative electrode in which a plurality of grooves are formed so that the pitch between the grooves satisfies the numerical range of the disclosed technology of the disclosed technology may have a structure more advantageous for lithium ion diffusion than otherwise.

The above description of the disclosed technology is for illustrative purposes only, and a person skilled in the art to which the disclosed technology pertains will understand that the disclosed technology may be easily modified into other specific forms without changing the technical idea or essential features of the disclosed technology. Therefore, it should be understood that the embodiments described above are example in all respects and not limiting. For example, each component described as a single entity may be implemented in a distributed manner, and likewise, components described as distributed may be implemented in a combined manner.

The disclosed technology can be implemented for manufacturing electrodes for lithium secondary batteries and other rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to manufacture improved electrochemical devices such as a battery used in various power sources and power supplies, thereby mitigating climate changes in connection with uses of power sources and power supplies. The secondary batteries made by using the disclosed technology can be used to address various adverse effects such as air pollution and greenhouse emissions by powering electric vehicles (EVs) as alternatives to vehicles using fossil fuel-based engines and by providing battery-based energy storage systems (ESSs). Such secondary batteries may include, for example, lithium ion batteries, nickelcadmium batteries, nickel-metal hydride batteries, and nickel-hydrogen batteries.

Only a few embodiments and examples are described. Enhancements and variations of the disclosed embodiments and other embodiments can be made based on what is described and illustrated in this patent document.

### Claims

1.    A method for manufacturing an electrode for a lithium secondary battery, comprising:

forming an electrode active material layer on at least one surface of an electrode current collector;
forming a plurality of grooves in the electrode active material layer; and
rolling the electrode active material layer that includes the plurality of grooves.

**2.** The method according to claim 1, wherein the electrode is a negative electrode.

**3.** The method according to claims 1 or 2, wherein (a) the plurality of grooves is arranged such that each pitch between two adjacent grooves of the plurality of grooves is in a range of 50 $\mu$m to 200 $\mu$m, and/or (b) the plurality of grooves has a depth of 10 $\mu$m to 250 $\mu$m, and/or (c) the plurality of grooves has a width of 10 $\mu$m to 200 $\mu$m.

**4.** The method according to any one of claims 1 to 3, wherein the plurality of grooves is formed such that, in a cross-section view taken in a thickness direction of the electrode active material layer, each groove includes a shape that includes at least a part of a circle, at least a part of a square, at least a part of a triangle, or at least part of a trapezoid.

**5.** The method according to claim 4, wherein the plurality of grooves has a common shape.

**6.** The method according to any one of claims 1 to 5, wherein the electrode active material layer is processed by rolling to have a first thickness deviation of 4.5% or less, as defined by Equation 1:

[Equation 1]

$$\text{First thickness deviation (\%)} = \left(\frac{T_h - T_a}{T_a}\right) \times 100$$

wherein $T_h$ is a maximum thickness of the electrode after the rolling is performed, and $T_a$ is an average thickness of the electrode before the forming of the plurality of grooves.

**7.** An electrode for a lithium secondary battery comprising: an electrode current collector and an electrode active material layer formed on at least one surface of the electrode current collector, wherein the electrode active material layer includes a plurality of grooves and corresponding closed portions adjacent to each of the plurality of grooves.

**8.** The electrode for a lithium secondary battery according to claim 7, wherein the electrode is a negative electrode.

**9.** The electrode for a lithium secondary battery according to claims 7 or 8, wherein (a) the plurality of grooves is arranged such that each pitch between two adjacent grooves of the plurality of grooves is in a range of 50 $\mu$m to 200 $\mu$m, and/or (b) each of the plurality of grooves has a depth of 10 $\mu$m to 250 $\mu$m, and/or (c) each of the plurality of grooves has a width of 10 $\mu$m to 200 $\mu$m.

**10.** The electrode for a lithium secondary battery according to any one of claims 7 to 9, wherein the plurality of grooves is formed such that, in a cross-section view taken in a thickness direction of the electrode active material layer, each groove includes a shape which includes at least a part of a circle, at least a part of a square, at least a part of a triangle, or at least part of a trapezoid.

**11.** The electrode for a lithium secondary battery according to claim 10, wherein the plurality of grooves have a common shape.

**12.** The electrode for a lithium secondary battery according to any one of claims 7 to 11, wherein the electrode has a second thickness deviation of 4.5% or less, as defined by Equation 2:

[Equation 2]

$$\text{Second thickness deviation (\%)} = \left(\frac{L5 - L4}{L4}\right) \times 100$$

wherein L4 is an average thickness of the electrode and L5 is a maximum thickness of the electrode.

**13.** The electrode for a lithium secondary battery according to any one of claims 7 to 12, wherein the closed portion seals a corresponding groove.

**14.** A lithium secondary battery comprising the electrode manufactured by the method according to any one of claims 1 to 6, or the electrode according to any one of claims 7 to 13.

# FIG. 1

```
        ┌──────────┐
        │  Start   │
        └────┬─────┘
             │
             ▼
  ┌────────────────────┐
  │  Preparation step  │ ── S100
  └────────┬───────────┘
           │
           ▼
  ┌────────────────────┐
  │  Formation step    │ ── S200
  └────────┬───────────┘
           │
           ▼
  ┌────────────────────┐
  │   Rolling step     │ ── S300
  └────────┬───────────┘
           │
           ▼
        ┌──────────┐
        │   End    │
        └──────────┘
```

# FIG. 2

# FIG. 3

<u>1</u>

# FIG. 4

<u>1</u>

210

200

100

# FIG. 5

<u>1</u>

210

200

100

# FIG. 6

# FIG. 7

1

220    L1    210    L3    200    100    L2

# FIG. 8

<u>1</u>

# FIG. 9

# FIG. 10

# FIG. 11

SKI 5.0kV 15.5mm x200 SE(UL)    200μm

FIG. 12

SKI 5.0kV 15.6mm x200 SE(UL)    200μm

# FIG. 13

# FIG. 14

# FIG. 15

Capacity Retention Rate (%)

Capacity (RPT)

Cycle No.

- - -•- - - Comparative Example 8
- - -•- - - Comparative Example 2
- -•-•- Example 2

# FIG. 16

Europäisches
Patentamt

European
Patent Office

Office européen
des brevets

# EUROPEAN SEARCH REPORT

**Application Number**

EP 25 21 1845

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/075385 A1 (JO BYUNG WOOK [KR] ET AL) 9 March 2023 (2023-03-09)<br>* figures 5,6 *<br>* paragraph [0009] *<br>* paragraphs [0062] - [0075] *<br>----- | 1-6,14 | INV.<br>H01M4/04<br>H01M10/0525 |
| X | US 2022/293902 A1 (SHIONOYA HARUKA [JP] ET AL) 15 September 2022 (2022-09-15)<br>* figure 6A *<br>* paragraph [0014] *<br>* paragraph [0035] *<br>* paragraphs [0050] - [0055] *<br>* paragraph [0136] *<br>----- | 7-14 | |
| A | US 2011/281170 A1 (MITSUDA KENRO [JP] ET AL) 17 November 2011 (2011-11-17)<br>* figures 3-4 *<br>* paragraphs [0037] - [0040] *<br>----- | 1-14 | |

**TECHNICAL FIELDS SEARCHED (IPC)**

H01M

The present search report has been drawn up for all claims

| Place of search | Date of completion of the search | Examiner |
|---|---|---|
| Munich | 18 March 2026 | Kelly, Michael |

EPO FORM 1503 03.82 (P4C01)

**EP 4 738 444 A1**

## ANNEX TO THE EUROPEAN SEARCH REPORT
## ON EUROPEAN PATENT APPLICATION NO.

EP 25 21 1845

18-03-2026

| Patent document cited in search report | Publication date | Patent family member(s) | Publication date |
|---|---|---|---|
| US 2023075385 A1 | 09-03-2023 | CN 115732629 A | 03-03-2023 |
| | | EP 4152429 A2 | 22-03-2023 |
| | | KR 20230033349 A | 08-03-2023 |
| | | US 2023075385 A1 | 09-03-2023 |
| US 2022293902 A1 | 15-09-2022 | CN 115084424 A | 20-09-2022 |
| | | EP 4057374 A2 | 14-09-2022 |
| | | JP 7301083 B2 | 30-06-2023 |
| | | JP 2022139880 A | 26-09-2022 |
| | | KR 20220128302 A | 20-09-2022 |
| | | US 2022293902 A1 | 15-09-2022 |
| US 2011281170 A1 | 17-11-2011 | CN 102341875 A | 01-02-2012 |
| | | DE 112010001565 T5 | 15-11-2012 |
| | | JP 5345207 B2 | 20-11-2013 |
| | | JP 5634560 B2 | 03-12-2014 |
| | | JP 2013211575 A | 10-10-2013 |
| | | JP WO2010116872 A1 | 18-10-2012 |
| | | US 2011281170 A1 | 17-11-2011 |
| | | WO 2010116872 A1 | 14-10-2010 |